(19) **Europäisches Patentamt**

**European Patent Office**

**Office européen des brevets**

(11) **EP 1 135 885 B1**

(12) **EUROPEAN PATENT SPECIFICATION**

(45) Date of publication and mention
of the grant of the patent:
**11.01.2006 Bulletin 2006/02**

(51) Int Cl.:
*H04L 5/06* (2006.01)      *H04L 5/26* (2006.01)
*H04J 4/00* (2006.01)

(21) Application number: **99956230.9**

(22) Date of filing: **26.11.1999**

(86) International application number:
**PCT/GB1999/003947**

(87) International publication number:
**WO 2000/033505 (08.06.2000 Gazette 2000/23)**

(54) **A RECEIVER AND METHOD OF RECEIVING FOR AN FDMA/TDMA RADIO SYSTEM**

EMPFÄNGER UND VERFAHREN ZUM EMPFANGEN FÜR EIN FDMA/TDMA FUNKSYSTEM

RECEPTEUR ET PROCEDE PERMETTANT D'ASSURER LA RECEPTION POUR UN SYSTEME DE RADIOCOMMUNICATION AMRF/AMRT

(84) Designated Contracting States:
**DE FR GB IT**

(30) Priority: **03.12.1998 GB 9826665**

(43) Date of publication of application:
**26.09.2001 Bulletin 2001/39**

(73) Proprietor: **Nokia Corporation**
**02150 Espoo (FI)**

(72) Inventor: **LAMACRAFT, Kevin,**
**Nokia Networks Ltd.**
**Camberley,**
**Surrey GU15 3BW (GB)**

(74) Representative: **Style, Kelda Camilla Karen et al**
**Page White & Farrer,**
**54 Doughty Street**
**London WC1N 2LS (GB)**

(56) References cited:
**FR-A- 2 702 903         US-A- 4 754 449**
**US-A- 5 038 344**

EP 1 135 885 B1

## Description

## FIELD OF INVENTION

The present invention relates to a receiver and a method of receiving and, in particular but not exclusively, for use in a wireless cellular telecommunication network.

## BACKGROUND TO THE INVENTION

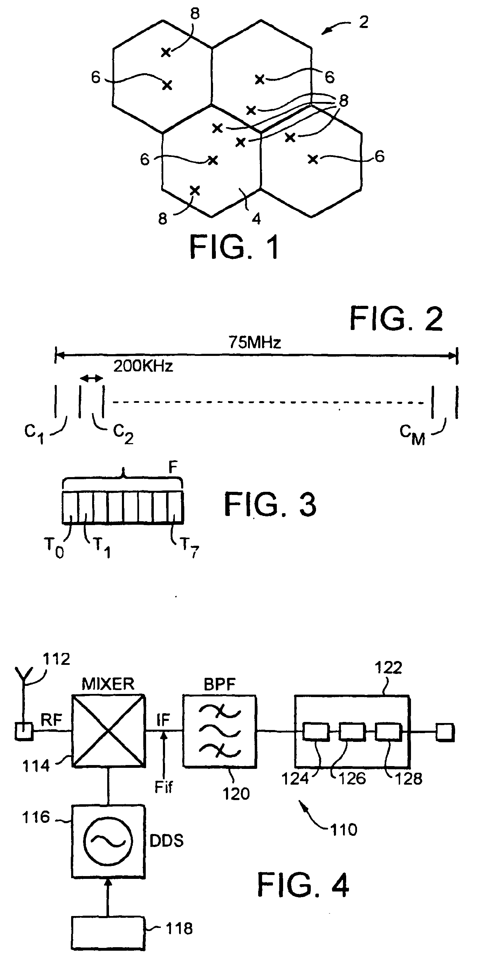

A typical known wireless telecommunications cellular network will now be described with reference to Figure 1. The area covered by the network 2 is divided into a plurality of cells 4. Each cell 4 is served by a base transceiver station 6 which is arranged to transmit signals to and receive signals from terminals located in the cell 4 associated with the respective base transceiver station 6. The terminals 8 may be mobile stations which are able to move between the cells 4.

Each base transceiver station is, in the GSM standard (Global System for Mobile Communications), arranged to receive N out of M available channels C1...CM as illustrated in Figure 2. The GSM standard uses a frequency division multiple access technique. Each channel has a bandwidth of 200KHz. Each bandwidth is divided into frames F one of which is shown in Figure 3. Each frame is divided into eight slots TO...T7. The GSM standard is a time division multiple access (TDMA) system and accordingly different mobile stations will be allocated different time slots for a given frequency. Thus, the base transceiver station will receive signals from different mobile stations in different time slots at the same frequency.

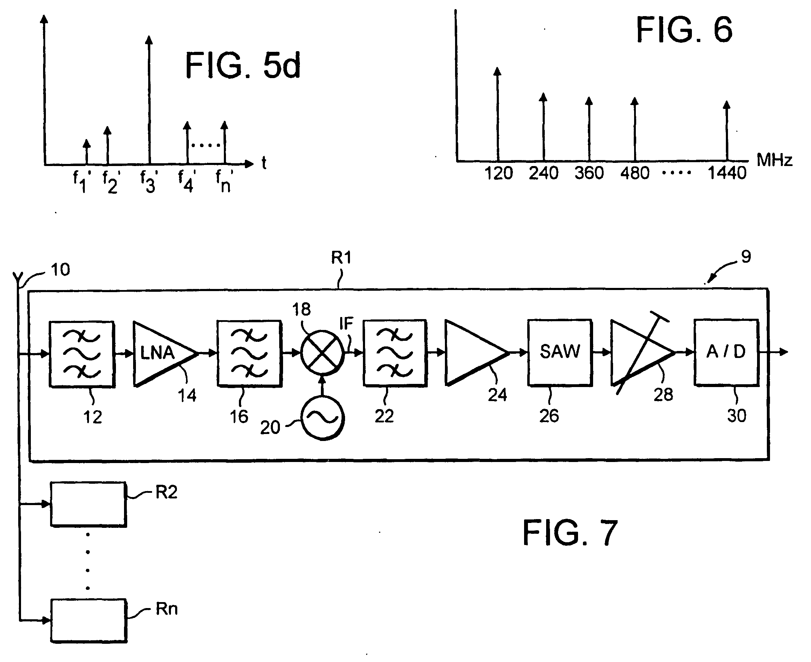

Reference is made to Figure 7 which shows part of a known base transceiver station 9 which is arranged to receive N channels at the same time. For clarity, only the receiving part of the base transceiver station 9 is shown. The base transceiver station 9 has an antenna 10 which is arranged to receive signals from mobile stations in the cell served by the base transceiver station 9. The base transceiver station comprises N receivers R1, R2 ... RN. Thus one receiver is provided for each channel which is to be received by the base station 9 at the same time. All of the receivers R1-RN are the same and accordingly the components of the first receiver R1 only are shown.

The first receiver R1 comprises a first bandpass filter 12 which is arranged to filter out signals which fall outside the receive band in which the M available channels are located. The filtered output is input to a first low noise amplifier 14 which amplifies the received signals. The amplified signal is then passed through a second bandpass filter 16 which filters out any noise, such as harmonics or the like introduced by the first amplifier 14. The output of the second bandpass filter is connected to a mixer 18 which receives a second input from a local oscillator 20. The frequency of the output of the local oscillator 20 will depend on the frequency of the channel allocated to the particular receiver. The output of the second bandpass filter 16 is mixed with the output of the local oscillator 20 to provide a signal at an intermediate frequency IF, which is less than the radio frequency at which the signals are received. The intermediate frequency IF output by the mixer 18 of each receiver will be the same for all receivers and may, for example, be 180 MHz. For example, if the channel allocated to a given receiver has a frequency of 880 MHz then the local oscillator 20 of that receiver will be tuned to 700 MHz. On the other hand, if the channel allocated to a given receiver has a frequency of 900 MHz, then the local oscillator will be tuned to a frequency of 720 MHz.

The output of the mixer 18 is input to a third bandpass filter 22 which filters out any noise introduced by the mixer 18. The output of the third bandpass filter 22 is amplified by a second amplifier 24 and output to a surface acoustic wave (SAW) filter 26. The surface acoustic wave filter 26 applies filtering to all interfering signals except that of the channel allocated to that particular receiver. In other words, all the channels received by the antenna 10 with the exception of the channel allocated to the receiver will be filtered by the surface acoustic wave filter 26. The output of the surface acoustic wave filter 26 is connected to an automatic gain control unit 28 which alters the gain of the signal so that it falls within the dynamic range of an analogue to digital converter 30.

One problem with the known architecture is that it is necessary to provide a receiver for each channel. This is to ensure that each signal which is input to an analogue to digital converter is within the dynamic range of that converter. The need to provide a receiver for each channel increases substantially the costs of the base transceiver station. It is therefore an aim of embodiments of the present invention to address this problem.

Existing prior art methods of receiving a plurality of frequency separated channels are based around the use of chirp signals or frequency sweeps, as described in US 5,038,344 and US 4,754,449. The frequency separated input signals are mixed with a chirp or frequency sweep signal, and the output of the mixer is filtered to compress the output into a series of pulses separated in time. Each of these pulses corresponds to one of the input frequencies. The use of complex and precise filters is required to compress the signals, once they have been mixed with the frequency sweep.

## SUMMARY OF THE INVENTION

According to one aspect of the present invention, there is provided a receiver comprising means for receiving a first plurality of signals at different frequencies F1, F2,... FN at the same time wherein each of said first plurality of signals has a plurality of bits; characterised in that means for generating a second plurality of signals at different frequencies F1', F2',... FN' in sequence, wherein these frequencies are arranged to satisfy the criteria F1-F1'=F2-F2'=...=FN-FN'=K, wherein K is a constant frequency; a mixer for receiving, at the same time, the first plurality of signals at different frequencies and one of the second plurality of signals at a time, wherein the second plurality of signals are provided for receiving by the mixer in succession, said first plurality of signals being mixed with successive ones of the second plurality of signals to produce a plurality of sets of samples, each set of samples comprising one sample for each of said first plurality of signals, wherein the mixer is arranged to generate a set of samples in a period equal to or less than the period of one bit of said first plurality of signals; and filter means for receiving signals output from said mixer, said filter means being arranged for filtering out those of the first plurality of signals which after mixing are not at said constant frequency, said filter means being arranged to output a series of samples of the first plurality of signals at the constant frequency, wherein each of the said samples are separated in time.

Thus, it is possible to provide a single receiver which is able to deal with a number of signals at different frequencies, which may be different channels. Accordingly, the number of components which are required may be reduced as compared to the known receivers. As the samples are spaced apart in time, this makes it possible to provide a receiver in which, for example, the magnitude of each individual signal can be altered in order to allow the signals always to be within the dynamic range of a given element, such as an analogue to digital converter.

The generating means preferably comprises a direct digital synthesiser. Preferably, the generating means is arranged to generate each of the second plurality of signals in turn.

The generating means may be arranged to generate signals and then to increase the frequency thereof to provide said second plurality of signals. This is advantageous where the generating means is unable to provide signals of a high enough frequency for use in a particular receiver. The generating means may comprise multiplier means for increasing the frequency of the generated signals in order to provide the second plurality of signals. Alternatively, the generating means may utilise the harmonics of the generated signals to provide the second plurality of signals. In yet another alternative, the generating means may comprise means for adding the generated signals to a further signal, for example from a synthesiser, to provide said second plurality of signals.

Preferably, the frequencies of the first plurality of signals are reduced by said mixer to the same frequency. This makes it easier for components downstream of the reducing means to process the received signals.

A base station preferably includes a receiver as defined hereinbefore. Preferably, the base station uses a time division multiple access system.

According to a second aspect of the present invention, there is provided a method of receiving comprising the steps of receiving a first plurality of signals at different frequencies F1, F2,... FN at the same time, wherein each of said first plurality of signals has a plurality of bits; characterised by generating a second plurality of signals at different frequencies F1', F2',... FN' in sequence wherein these frequencies are arranged to satisfy the criteria F1-F1'=F2-F2'=...=FN-FN'=K, wherein K is a constant frequency; reducing the frequency of the first plurality of signals by mixing the first plurality of signals at different frequencies at the same time, and one of the second plurality of signals at a time wherein the second plurality of signals are received by the mixer in succession, said first plurality of signals being mixed with successive ones of the second plurality of signals to produce a plurality of sets of samples, each set of samples comprising one sample for each of said first plurality of signals, wherein the mixer is arranged to generate a set of samples in a period equal to or less than the period of one bit of said first plurality of signals; and providing a series of samples by filtering out those of the first plurality of signals which are not at said constant frequency, each of said samples being separated in time.

## BRIEF DESCRIPTION OF THE DRAWINGS

For a better understanding of the present invention and as to how the same may be carried into effect, reference will now be made by way of example to the accompanying drawings in which:-

Figure 1 shows a typical wireless cellular telecommunications network;
Figure 2 shows the channels receivable by base transceiver stations;
Figure 3 illustrates the structure of a time frame;
Figure 4 shows a receiver embodying the present invention;
Figure 5a shows a diagram of the different carrier frequencies received simultaneously;
Figure 5b illustrates the method of sampling during one bit of one time slot;
Figure 5c illustrates the control signal;
Figure 5d illustrates the output of the bandpass filter of Figure 4;
Figure 6 illustrates the harmonics provided by the synthesise of Figure 4; and
Figure 7 shows a known GSM base transceiver station.

## DETAILED DESCRIPTION OF PREFERRED EMBODIMENTS OF THE INVENTION

The receiver 110 illustrated in Figure 4 is incorporated in a base transceiver station for example in a network such as illustrated in Figure 1. For the purpose of the following description, the receiver 110 will be described in the context of a GSM system. However, it should be appreciated that embodiments of the present invention can be used with any other suitable telecommunications standard.

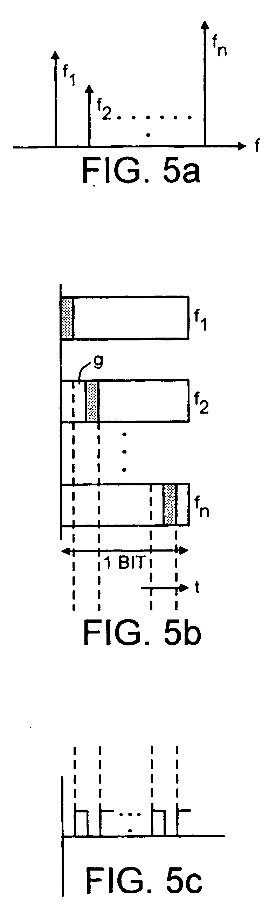

The receiver 110 comprises an antenna 112 which is arranged to receive signals carried by N different carriers. Each of the N different carriers is at a different frequency. In Figure 5a, the N different carrier frequencies F1-FN are illustrated, each of which is at a radio frequency. Each carrier frequency channel F1-FN has a bandwidth of 200KHz as in the current GSM standard. Adjacent carrier frequencies F1...FN are spaced apart by at least 600 kHz. The N different carriers and the signals carried thereby are received by the antenna 112. The signals received by the antenna 112 are input to a mixer 114. As with the known receiver illustrated in Figure 7, the signals may be input first to a bandpass filter, an amplifier and a further bandpass filter. However, these additional components may be omitted in some embodiments of the present invention.

The mixer 114 also receives an input from a direct digital synthesiser 116. The direct digital synthesiser 116 is arranged to frequency hop and provides signals at frequency F1', F2' and FN' in sequence. The frequencies provided by the direct digital synthesiser 116 are arranged for example to satisfy the following criteria:

$$F1-F1'=F2-F2'=...=FN-F'N=K$$

where K is a constant.

The frequency hopping of the direct digital synthesiser 116 is controlled by a controller 118 which provides a control signal. Each time the control signal changes, for example, from a low level to a high level, the frequency which the direct digital synthesiser 116 produces is changed. Accordingly, in the first control cycle, the digital direct synthesiser 116 will provide signals at frequency F1', in the next control cycle signals at frequency F2' will be provided and so on. The control frequency is selected so that each of the N different frequencies F1-FN can be sampled in a time equal to a bit period. The bit period is the length of time for which each bit on each transmitted carrier wave is constant. In other words, the timing of the direct digital synthesiser 116 allows each consecutive bit on each carrier wave to be sampled within one bit period. Thus all of the frequencies F1'...FN' are produced in turn in a single bit period.

The output of the mixer 114 is connected to a bandpass filter 120 which is tuned to the frequency K. Thus any signals which are not at frequency K are filtered. When the direct digital synthesiser 116 provides a signal at frequency F1', the signals at frequency F1 are reduced to K. However the signals at frequencies F2'....FN' are reduced to respective different frequencies which are different to frequency K.

Accordingly, when the output of the mixer 114 is input to the bandpass filter 120, only the signal derived from the frequency F1 is output by the filter 120, the other signals being reduced or removed by the filter 120. This process is repeated each time the frequency provided by the synthesiser 116 changes.

Thus as can be seen from Figure 5b which illustrates the timing of the sampling and Figure 5c which shows the control signal frequency, the signal initially at frequency F1 is sampled at the beginning of a bit period, the synthesiser being tuned to frequency F1'. When the sampling of the first signal initially at F1 is completed, the direct digital synthesiser 116 is tuned to provide the second frequency F2'. As can be seen from Figure 5b, it takes the direct digital synthesiser 116 a small amount of time to change from providing the frequency F1' to providing the frequency F2'. Accordingly, during this period, marked by reference g, no sampling will take place. When the direct digital synthesiser 116 provides the second synthesiser frequency F2', the signal initially at the second carrier F2 will be sampled. This is carried out for each of the N carrier frequencies F1-FN. The output of the bandpass filter 120 with respect to time is shown in Figure 5d.

In the current GSM standard, the bit period is $3.69\mu$ seconds. In one embodiment of the present invention, the number of channels and hence different carrier frequencies which will be received at the same time by the base transceiver station will be four. If it is assumed that the guard period and the sampling period are the same, then the direct digital synthesiser 116 will need to hop between the four frequencies required to down convert a respective one of the received channels at a rate of 461ns. In other words, the time between the ending of one sampling period and the beginning of the next sampling period is be 461ns and the length of each sampling period will be 461 ns. However, it should be appreciated that it is not essential that the sample and guard times be equal.

The maximum switching speed of currently available direct digital synthesisers 116 is equal to $2/F_c$ where $F_c$ is the clock frequency. One commercially available direct digital synthesiser has a clock speed of 300MHz. This would mean that the maximum switching speed would be 7ns so the target of 461ns outlined hereinbefore is clearly possible.

With the current commercially available direct digital synthesisers, the maximum frequency which can be generated is around 40% of the clock frequency. Thus, with a clock speed of 300MHz, the maximum output frequency would be around 120MHz. The maximum frequency which will be required will depend on the standard with which the receiver is designed to operate. For example, for one GSM standard, the frequencies required from the synthesiser are around 700 MHz whilst for other standards, higher frequencies of around 1600 MHz would be required.

There are several ways in which this upconversion (in other words the increase in the frequency output by the synthesiser to the required level) can be achieved. The first method is to simply use a multiplier to increase the frequency output by the direct digital synthesiser. The same multiplier can be used to provide the different frequencies. The base frequency output by the synthesiser would then be altered as required. The multiplier would be located between the output of the synthesizer and the input to the mixer. Frequency multipliers are well known and typically comprise a nonlinear circuit which is used to generate a signal at a multiple of the input signal frequency. Whilst multipliers can be used in certain embodiments of the present invention, the signal output by the multiplier includes unwanted noise. In an alternative, the base frequency of the synthesiser remains the same and the factor by which the output of the synthesiser is multiplied by the multiplier is altered in order to obtain the required output frequency for the mixer

A second method is to make use of the fact that the direct digital synthesiser will produce harmonics of the main frequency. In normal use, these harmonics may be removed by filtering. For example, if the main frequency output by the direct digital synthesiser is f then harmonics will be output at 2f, 3f, ... nf where n is an integer. For example, if the main frequency output by a direct digital synthesiser is 120MHz, then harmonics will be output at 240MHz, 360MHz etc, as illustrated in Figure 6. If for example a frequency around 1500MHz were required, then the harmonic at, for example, 1440MHz could be used. As the harmonics will have a smaller amplitude than the main frequency, an amplifier is required. Additionally, a filter will be required to filter out the unwanted frequencies including the main frequency and the unused harmonics. In order to modify the embodiment shown in Figure 4 to use this upconversion, an amplifier and filter simply need to be placed between the direct digital synthesiser 16 and the mixer 14. The base frequency from which the harmonics are obtained is altered in accordance with the frequency which is required to be input to the mixer.

In a third method of upconversion, a conventional up conversion technique is used. Thus, the embodiment shown in Figure 4 would be modified to include one or more mixers between the direct digital synthesiser 116 and the mixer 114. The additional mixer would include one input from the direct digital synthesiser and one input from a fixed frequency synthesiser. The fixed frequency synthesiser would only provide a single frequency and the output of the direct digital synthesiser would be altered to ensure that the correct frequency is output to the mixer. The additional mixer would be arranged to effectively add the two frequencies together to give a higher frequency.

As mentioned hereinbefore, the output of the direct digital synthesiser 116 is mixed with the frequencies received from the antenna 112 by the mixer 114. The mixer 114 reduces the frequencies of the received signals to the intermediate frequency K. The output of the mixer 114 is input to the bandpass filter 120. Figure 5d shows the typical output of the bandpass filter 120. The output of the bandpass filter 120 provides an instantaneous value for each bit of a signal with each value being spaced from one another.

The filtered output of the bandpass filter 120 is input to an analogue to digital converter and digital signal processor block 122. The processor block 122 comprises an automatic gain control block 124 connected to the output of the bandpass filter. This automatic gain control block 124 controls the gain of the signal output by the bandpass filter 120 so that the signal has an amplitude falling within a predetermined range. That range is preferably the dynamic range of the analogue to digital converter block in the processor 122. The output of the automatic gain control block is input to an analogue to digital converter 126 which also forms part of the processor 122. The signal from the automatic gain control block 124, which is in analogue form, is converted to digital form.

The output of the analogue to digital converter 126 is connected to and processed by a digital signal processor 128 of the processor 122 in a manner which is generally known in the art and accordingly will not be described in any further detail hereinafter. In general, the digital signal processor extracts the data from the carrier waves.

Currently available digital signal processors and analogue to digital converters are capable of extracting phase information from a carrier that exists for one bit in one phase state for around 48 cycles of the carrier frequency per phase state. In the embodiment shown in Figure 4, if the intermediate frequency, for example 170MHz is sampled by the analogue to digital converter of the unit 122 for a duration of 461 ns, there would be 78 cycles of the frequency per phase state. Clearly, known digital signal processors would be able to deal with this.

It should be noted that in some embodiments of the present invention, it may not be necessary to upconvert the output of the direct digital synthesiser. This may be if relatively low frequency is required from the direct digital synthesiser. It is also envisaged that developments will occur which will permit direct digital synthesisers to provide higher frequencies.

In the described embodiments, a single receiver which is able to deal with all the channels is described. However, in one modification, a plurality of receivers is provided and each receiver is arranged to deal with a plurality of channels.

In the embodiment described hereinbefore, it is assumed that the signals which are received by the base station have synchronised timing so that the bit periods in each channel are synchronised. However in other embodiments of the invention, the channels need not be synchronised.

Whilst embodiments of the present invention have been described in relation to a GSM system, embodiments of the present invention can be used with any other suitable standard including analogue standards, other standards using time division multiple access (TDMA), spread spectrum systems such as code division multiple access (CDMA), frequency division multiple access (FDMA), space division multiple access (SDMA) and hybrids of any of these systems.

Embodiments of the present invention have been described in the context of a receiver for a base transceiver station. However, embodiments of the present invention can be used in any other suitable receiver such as in a mobile station as well as in other types of receiver which are not used in cellular networks but which are arranged to receive a number of signals, at different frequencies, at the same time. Other applications include multicarrier power control for transmitters.

## Claims

1. A receiver (110) comprising
   means for receiving a first plurality of signals (112) at different frequencies F1, F2,... FN at the same time wherein each of said first plurality of signals has a plurality of bits;
   **characterised in that**:

   means for generating a second plurality of signals (116) at different frequencies F1', F2',... FN' in sequence, wherein these frequencies are arranged to satisfy the criteria F1-F1'=F2-F2'=...=FN-FN'=K, wherein K is a constant frequency;
   a mixer (114) for receiving, at the same time, the first plurality of signals at different frequencies and one of the second plurality of signals at a time, wherein the second plurality of signals are provided for receiving by the mixer (114) in succession, said first plurality of signals being mixed with successive ones of the second plurality of signals to produce a plurality of sets of samples, each set of samples comprising one sample for each of said first plurality of signals, wherein the mixer is arranged to generate a set of samples in a period equal to or less than the period of one bit of said first plurality of signals; and
   filter means (120) for receiving signals output from said mixer (114), said filter means (120) being arranged for filtering out those of the first plurality of signals which after mixing are not at said constant frequency, said filter means being arranged to output a
   series of samples of the first plurality of signals at the constant frequency, wherein
   each of the said samples are separated in time.

2. A receiver (110) as claimed in claim 1, wherein said generating means (116) comprises a direct digital synthesiser.

3. A receiver (110) as claimed in any preceding claim, wherein the generating means (116) is arranged to generate each of said second plurality of signals in turn.

4. A receiver (110) as claimed in any one of the preceding claims, wherein the generating means (116) is arranged to generate signals and then to change the frequency thereof to provide said second plurality of signals.

5. A receiver (110) as claimed in claim 4, wherein the generating means (116) comprise multiplier means for increasing the frequency of the generated signals to provide the second plurality of signals.

6. A receiver (110) a claimed in claim 4, wherein the generating means (116) is arranged to utilise harmonics of said generated signals to provide said second plurality of signals.

7. A receiver (110) as claimed in claim 4, wherein the generating means (116) comprises means for adding said generated signals to a further signal to provide said second plurality of signals.

8. A receiver (110) as claimed in any one of the preceding claims, wherein the mixer (114) is arranged to reduce the frequencies of the first plurality of signals so that the series of samples are at the same frequency.

9. A base station incorporating a receiver (110) as claimed in any preceding claim.

10. A base station as claimed in claim 9, wherein said base station is adapted to use a time division multiple access system.

11. A method of receiving comprising the steps of:

    receiving a first plurality of signals at different frequencies F1, F2,... FN at the same time, wherein each of said first plurality of signals has a plurality of bits;
    **characterised by**:
    generating a second plurality of signals at different frequencies F1', F2',... FN' in sequence wherein these frequencies are arranged to satisfy the criteria F1-F1'=F2-F2'=...=FN-FN'=K, wherein K is a constant frequency;
    reducing the frequency of the first plurality of signals by mixing the first plurality of signals at different frequencies at the same time, and one of the second plurality of signals at a time wherein the second plurality of signals are received by the mixer in succession, said first plurality of signals being mixed with successive ones of the second plurality of signals to produce a plurality of sets of samples, each set of samples comprising one sample for each of said first plurality of signals, wherein the mixer is arranged to generate a set of samples in a period equal to or less than the period of one bit of said first plurality of signals; and

providing a series of samples by filtering out those of the first plurality of signals which are not at said constant frequency, each of said samples being separated in time.

## Patentansprüche

1.  Empfänger (110), mit:

    einer Einrichtung zum gleichzeitigen Empfangen einer ersten Vielzahl von Signalen (112) auf verschiedenen Frequenzen F1, F2, ... FN, wobei jedes von der ersten Vielzahl von Signalen eine Vielzahl von Bits aufweist;
    **gekennzeichnet durch**:
    eine Einrichtung zum Erzeugen einer zweiten Vielzahl von Signalen (116) auf verschiedenen Frequenzen F1', F2', ... FN' in Folge, wobei diese Frequenzen eingerichtet sind, das Kriterium F1-F1'=F2-F2'=...=FN-FN'=K zu erfüllen, wobei K eine konstante Frequenz ist;
    einen Mischer (114) zum gleichzeitigen Empfangen der ersten Vielzahl von Signalen auf verschiedenen Frequenzen und jeweils eines von der zweiten Vielzahl von Signalen, wobei die zweite Vielzahl von Signalen in Aufeinanderfolge zum Empfangen von dem Mischer (114) bereitgestellt ist, wobei die erste Vielzahl von Signalen mit aufeinanderfolgenden der zweiten Vielzahl von Signalen gemischt wird, um eine Vielzahl von Sätzen von Abtastungen zu erzeugen, wobei jeder Satz von Abtastungen eine Abtastung für jedes von der ersten Vielzahl von Signalen aufweist, wobei der Mischer eingerichtet ist, einen Satz von Abtastungen in einer Zeitdauer zu erzeugen, die gleich oder kleiner ist als die Zeitdauer von einem Bit der ersten Vielzahl von Signalen; und
    eine Filtereinrichtung (120) zum Empfangen von Signalen, die von dem Mischer (114) ausgegeben werden, wobei die Filtereinrichtung (120) zum Herausfiltern derjenigen von der ersten Vielzahl von Signalen eingerichtet ist, welche nach dem Mischen nicht auf der konstanten Frequenz sind, wobei die Filtereinrichtung eingerichtet ist, eine Reihe von Abtastungen von der ersten Vielzahl von Signalen auf der konstanten Frequenz auszugeben, wobei alle der Abtastungen zeitlich getrennt sind.

2.  Empfänger (110) gemäß Anspruch 1, wobei die Erzeugungseinrichtung (116) einen Direktdigitalgenerator aufweist.

3.  Empfänger (110) gemäß einem der vorstehenden Ansprüche, wobei die Erzeugungseinrichtung (116) eingerichtet ist, alle der zweiten Vielzahl von Signalen nacheinander zu erzeugen.

4.  Empfänger (110) gemäß einem der vorstehenden Ansprüche, wobei die Erzeugungseinrichtung (116) eingerichtet ist, Signale zu erzeugen und dann die Frequenz dieser zu ändern, um die zweite Vielzahl von Signalen bereitzustellen.

5.  Empfänger (110) gemäß Anspruch 4, wobei die Erzeugungseinrichtung (116) eine Multiplizierereinrichtung zum Erhöhen der Frequenz von den erzeugten Signalen aufweist, um die zweite Vielzahl von Signalen bereitzustellen.

6.  Empfänger gemäß Anspruch 4, wobei die Erzeugungseinrichtung (116) eingerichtet ist, Oberschwingungen der erzeugten Signale zu nutzen, um die zweite Vielzahl von Signalen bereitzustellen.

7.  Empfänger (110) gemäß Anspruch 4, wobei die Erzeugungseinrichtung (116) eine Einrichtung zum Addieren der erzeugten Signale zu einem weiteren Signal aufweist, um die zweite Vielzahl von Signalen bereitzustellen.

8.  Empfänger (110) gemäß einem der vorstehenden Ansprüche, wobei der Mischer (114) eingerichtet ist, die Frequenzen von der ersten Vielzahl von Signalen so zu reduzieren, dass die Reihe von Abtastungen auf der gleichen Frequenz ist.

9.  Basisstation mit einem Empfänger (110) gemäß einem der vorstehenden Ansprüche.

10. Basisstation gemäß Anspruch 9, wobei die Basisstation angepasst ist, ein Zeitmultiplex-Mehrfachzugriffssystem zu verwenden.

11. Empfangsverfahren, mit den Schritten:

    gleichzeitiges Empfangen einer ersten Vielzahl von Signalen auf verschiedenen Frequenzen F1, F2, ... FN, wobei jedes von der ersten Vielzahl von Signalen eine Vielzahl von Bits aufweist;
    **gekennzeichnet durch**:
    Erzeugen einer zweiten Vielzahl von Signalen auf verschiedenen Frequenzen F1', F2', ... FN' in Folge, wobei diese Frequenzen eingerichtet sind, das Kriterium F1-F1'=F2-F2'=...=FN-FN'= K zu erfüllen, wobei K eine konstante Frequenz ist;
    Reduzieren der Frequenz von der ersten Vielzahl von Signalen **durch** gleichzeitiges Mischen der ersten Vielzahl von Signalen auf verschiedenen Frequenzen und jeweils eines von der zweiten Vielzahl von Signalen, wobei die zweite Vielzahl von Signalen in Aufeinanderfolge von dem Mischer empfangen wird, wobei die erste Vielzahl von Signalen mit aufeinanderfolgenden der zweiten Vielzahl von Signalen gemischt wird, um eine Vielzahl von Sätzen von Abtastungen zu erzeugen, wobei jeder Satz von Abtastungen eine Abtastung für jedes von der ersten Vielzahl von Signalen aufweist, wobei der Mischer eingerichtet ist, einen Satz von Abtastungen in einer Zeitdauer zu erzeugen, die gleich oder kleiner ist als die Zeitdauer von einem Bit der ersten Vielzahl von Signalen; und
Bereitstellen einer Reihe von Abtastungen **durch** Herausfiltern derjenigen von der ersten Vielzahl von Signalen, welche nicht auf der konstanten Frequenz sind, wobei alle der Abtastungen zeitlich getrennt sind.

## Revendications

1. Récepteur (110) comprenant :

   des moyens pour recevoir une première pluralité de signaux (112) à des fréquences différentes F1, F2, ... FN en même temps, dans lequel chacun des signaux de ladite première pluralité de signaux comprend une pluralité de bits ;

   **caractérisé par** :

   des moyens pour générer une deuxième pluralité de signaux (116) à des fréquences différentes F1', F2', ... FN' en séquence, dans lequel ces fréquences sont organisées de façon à satisfaire le critère F1 - F1' = F2 - F2' = ... = FN - FN' = K, dans lequel K est une fréquence constante ;
   un mélangeur (114) pour recevoir, en même temps, la première pluralité de signaux à des fréquences différentes et un des signaux de la deuxième pluralité de signaux à la fois, dans lequel la deuxième pluralité de signaux est prévue pour être reçue par le mélangeur (114) successivement, ladite première pluralité de signaux étant mélangée avec des signaux successifs de la deuxième pluralité de signaux pour produire une pluralité d'ensembles d'échantillons, chaque ensemble d'échantillons comprenant un échantillon pour chacun de ladite première pluralité de signaux, dans lequel le mélangeur est disposé de façon à produire un ensemble d'échantillons au cours d'une période inférieure ou égale à la période d'un bit de ladite première pluralité de signaux ; et
   des moyens de filtrage (120) pour recevoir des signaux émis par ledit mélangeur (114), lesdits moyens de filtrage (120) étant disposés de façon à filtrer ceux de la première pluralité de signaux qui, après avoir été mélangés, ne se trouvent pas à ladite fréquence constante, lesdits moyens de filtrage étant disposés de façon à délivrer en sortie une série d'échantillons de la première pluralité de signaux à la fréquence constante, dans lequel chacun desdits échantillons est séparé dans le temps.

2. Récepteur (110) selon la revendication 1, dans lequel lesdits moyens de génération (116) comprennent un synthétiseur numérique direct.

3. Récepteur (110) selon l'une quelconque des revendications précédentes, dans lequel les moyens de génération (116) sont disposés de façon à générer chacun de ladite deuxième pluralité de signaux à son tour.

4. Récepteur (110) selon l'une quelconque des revendications précédentes, dans lequel les moyens de génération (116) sont disposés de façon à générer des signaux puis à modifier la fréquence de ceux-ci pour fournir ladite deuxième pluralité de signaux.

5. Récepteur (110) selon la revendication 4, dans lequel les moyens de génération (116) comprennent des moyens multiplieurs pour augmenter la fréquence des signaux produits pour fournir la deuxième pluralité de signaux.

6. Récepteur (110) selon la revendication 4, dans lequel les moyens de génération (116) sont disposés de façon à utiliser des harmoniques desdits signaux produits pour fournir ladite deuxième pluralité de signaux.

7. Récepteur (110) selon la revendication 4, dans lequel les moyens de génération (116) comprennent des moyens pour ajouter lesdits signaux produits à un autre signal pour fournir ladite deuxième pluralité de signaux.

8. Récepteur (110) selon l'une quelconque des revendications précédentes, dans lequel le mélangeur (114) est disposé de façon à réduire les fréquences de la première pluralité de signaux de sorte que les séries d'échantillons se trouvent à la même fréquence.

9. Station de base comprenant un récepteur (110) selon l'une quelconque des revendications précédentes.

10. Station de base selon la revendication 9, dans laquelle ladite station de base est adaptée pour utiliser un système d'accès multiple par répartition dans le temps.

11. Procédé de réception comprenant les étapes consistant à :

recevoir une première pluralité de signaux à des fréquences différentes F1, F2, .... FN en même temps, dans lequel chacun des signaux de ladite première pluralité de signaux comprend une pluralité de bits ;

**caractérisé par** les étapes consistant à :

générer une deuxième pluralité de signaux à des fréquences différentes F1', F2', ... FN' en séquence, dans lequel ces fréquences sont organisées de façon à satisfaire le critère F1 - F1' = F2 - F2' = ... = FN - FN' = K, dans lequel K est une fréquence constante ;
réduire la fréquence de la première pluralité de signaux en mélangeant la première pluralité de signaux à des fréquences différentes en même temps, et un des signaux de la deuxième pluralité de signaux à la fois, dans lequel la deuxième pluralité de signaux est reçue par le mélangeur successivement, ladite première pluralité de signaux étant mélangée avec des signaux successifs de la deuxième pluralité de signaux pour produire une pluralité d'ensembles d'échantillons, chaque ensemble d'échantillons comprenant un échantillon pour chacun de ladite première pluralité de signaux, dans lequel le mélangeur est disposé de façon à produire un ensemble d'échantillons au cours d'une période inférieure ou égale à la période d'un bit de ladite première pluralité de signaux ; et
fournir une série d'échantillons en filtrant ceux de la première pluralité de signaux qui ne se trouvent pas à ladite fréquence constante, chacun desdits échantillons étant séparé dans le temps.

FIG. 1

FIG. 2

FIG. 3

FIG. 4

FIG. 5a

FIG. 5b

FIG. 5c

FIG. 6

FIG. 5d

FIG. 7